# EUROPEAN PATENT APPLICATION

(11) **EP 2 743 133 A2**
(43) Date of publication of application: **18.06.2014**
(21) Application number: 13196914.9
(22) Date of filing: 12.12.2013
(51) Int. Cl.: B60R 1/00

(54) **Camera system**

(30) Priority: 13.12.2012 GB 201222472
(71) Applicant: Nissan Motor Manufacturing (UK) Ltd., Cranfield Bedfordshire MK43 0DB (GB)
(72) Inventor: Contoleon, Evangelos, Cranfield, Bedfordshire MK430DB (GB)

(57) **Abstract**

The present invention relates to a camera system (100) for a vehicle. The camera system comprises a display screen (128) for displaying a motion picture, a rear-view camera (122) for capturing motion picture data, an image processor (118) for processing captured motion picture data into a motion picture for display on the display screen (128) and a data transmitter for transmitting captured motion picture data to the image processor. The camera system further comprises a measurement device (114) for measuring a head and/or gaze movement of a driver, in use, and for generating a measurement signal, and a means for transmitting the measurement signal to the rear-view camera. The rear-view camera is arranged to alter the captured motion picture data transmitted by the data transmitter, in response to the measurement signal, thereby causing a field of view change of the motion picture on the display screen.

## Description

### Field of the invention

The present invention relates to a camera system. For example the present invention relates to a camera system for a vehicle. In particular, the invention relates to camera system arranged to replicate a rear-view mirror of a vehicle. The present invention also relates to a vehicle comprising a camera system.

### Background to the invention

Rear-view mirrors are used on many automobiles for example vehicles such as cars, light commercial vehicles (LCVs), heavy goods vehicles (HGVs) and vans. Rear-view mirrors have also been used for motorcycles, sea-going vessels and aircraft. Rear-view mirrors enable a driver of a vehicle to see what is behind them, for example in order to assess whether another vehicle is coming up behind them.

In a vehicle, a rear-view mirror is usually attached towards the top of the front windscreen, with the reflective surface of the mirror facing the rear windscreen or rear end of the vehicle. The rear-view mirror is held within an adjustable bracket such that the height and viewing angle can be manipulated.

One such conventional rear-view mirror is mounted on the internal surface of the windscreen so as to adjust the viewing angle of the mirror to the driver.

Many vehicles are arranged in a 'blind' format. 'Blind' vehicles are those which lack rear and rear-side windows, thus limiting the rear view for a driver and making a conventional rear-view mirror of the aforementioned type redundant. Most commonly, such 'blind' vehicles include vans, trucks, heavy goods vehicles (HGVs) and light commercial vehicles (LCVs).

LCV's are regularly driven in congested urban areas where a lack of rear visibility is a major disadvantage. The lack of rear visibility in LCV's has been a major factor correlating to many traffic collisions, as well as low-speed and parking accidents.

A number of partial solutions have been implemented in recent times in order to minimise the problem of 'blind' vehicles not having a useful conventional rear-view mirror.

One such example is the use of wide-angled mirrors located on existing side mirrors to extend the viewing range of the side mirrors. The disadvantage of wide-angled side mirrors is that they do not provide a true rear view as the positioning and range of the mirrors still gives rise to a blind spot for the driver. Blind spots inhibit driver visibility for anything that is close-up and directly behind the rear of the vehicle. In addition, side rear-view mirrors only provide an estimation of a vehicle's extremities.

A second partial solution for an alternative to a rear-view mirror has been the development of visual and or audible parking sensors. Such systems have sensors located towards the front and/or rear of a vehicle and commonly on the vehicle bumper. Parking sensors are generally arranged to sense when an object is close to the bumper and warns the driver through an audible or visual warning signal. Generally, parking sensors are only useful when a vehicle is being parked and not during normal driving. Parking sensors also suffer from the disadvantage that they are unintuitive to use, do not give the driver real faith in their accuracy and do not provide a true visual representation of obstacles.

A third partial solution is the use of rear-camera monitor systems. Rear-camera monitor systems either offer a limited viewing angle, or a large viewing angle but with a very small image size. When mounted as a direct replacement for a mirror, for example a windscreen mirror, the camera is unintuitive as the driver only sees one fixed field of view.

Therefore, there is a need for an improved system for vehicles which provides a rear view to the driver and which addresses the aforementioned problems.

### Summary of the Invention

According to a first aspect of the present invention, there is provided a camera system for a vehicle, said camera system comprising:
a display screen for displaying a motion picture, a rear-view camera for capturing motion picture data, an image processor for processing captured motion picture data into a motion picture for display on the display screen and a data transmitter for transmitting captured motion picture data to the image processor. The camera system further comprises a measurement device for measuring a head and/or gaze movement of a driver, in use, and for generating a measurement signal. The camera system also includes a means for transmitting the measurement signal to the rear-view camera where the rear-view camera is arranged to alter the captured motion picture data transmitted by the data transmitter, in response to the measurement signal, thereby causing a field of view change of the motion picture on the display screen.

The camera system according to the first aspect of the invention has a particular application for use as a replacement for a conventional rear-view mirror system in a vehicle, particularly when the vehicle is 'blind' i.e. those which lack rear and rear-side windows, thus limiting the rear view for a driver and making a conventional rear view mirror system of the aforementioned type, redundant. The camera system is intuitive to a vehicle driver's head and/or gaze movement and will alter the perceived viewing angle of the motion picture displayed on the display screen according to the positioning of the driver's head and/or gaze.

By having a measurement device which can measure the head and/or gaze movement of a driver, which in turn can initiate a response by altering the motion picture data sent to the display screen, the motion picture displayed on the display screen can replicate the view that would be created by the reflection of a mirror, irrespective of the viewing angle at which the driver views the display screen.

The measurement device may comprise a measurement processor for processing the measurement of the head and/or gaze movement into the measurement signal. The measurement processor can convert the crude measurement of the head and/or gaze movement by the driver into a signal that can be transmitted to the rear-view camera.

The camera system may comprise a receiver and a measurement signal transmitter for transmitting the measurement signal to the receiver, wherein the receiver is communicable with the rear-view camera.

The receiver may be integrated with, or may be a separate component of, the rear-view camera. The receiver may be arranged to receive a signal from the measurement signal transmitter and communicate with the rear-view camera so as to initiate a change in the motion picture data sent to the display screen, dependent on the signal received from the measurement signal transmitter.

The measurement device may comprise a tracking camera configured to track the head and / or gaze movement of a driver, in use. The tracking camera can be used to measure the movement of the head and/or gaze of the driver of a vehicle, which can then be converted into a measurement signal.

The tracking camera may be positioned in alignment with a central axis of the display screen so that in use, the driver will move their head and/or gaze towards the tracking camera at the same angle and direction as they would to see the display screen. This is advantageous as it allows a corresponding signal to be sent to the rear-view camera to cause a change in the motion picture data sent to the display screen, such that the motion picture is displayed with a field of view which replicates a reflection from a mirror, were the driver to be looking at a mirror with the same head and/or gaze position and angle.

The rear-view camera may be configured to capture real-time motion picture data. By capturing real-time motion picture data, the motion picture data may be processed within milliseconds or microseconds so that it is available virtually immediately as feedback, the feedback being the motion picture displayed on the display screen. This is advantageous because it means that when the driver moves his head and/or gaze, the motion picture data is updated immediately so that the driver sees a 'live' representation of what is going on behind the vehicle i.e. a real-time virtual reflection.

The data transmitter may comprise a wired and/or wireless transmission means for transmitting captured motion picture data to the image processor. Due to the potential vicinity of the rear-view camera relative to the display screen and / or measurement device, the image processor and data transmitter may have a wireless connection. The wireless connection may be Bluetooth®, infra-red or Wi-Fi®.

In use, for example, upon detection of a head and/or gaze movement of a driver by the measurement device, the measurement device generates a measurement signal, the measurement signal transmitter transmits the measurement signal to the receiver, and the receiver communicates with the rear-view camera to alter the captured electronic motion picture data in response to the measurement signal, thereby causing a field of view change of the motion picture on the display screen. The field of view change in response to the head and/or gaze movement allows the driver of the camera system to view multiple aspects of rear-view, rather than a single aspect. For example, rather than the camera system showing a single fixed display on the display screen, the motion picture corresponding to a rear-view shown on the display screen will vary depending on the position of the driver's head and/or gaze. This is advantageous when used as a replacement for a rear view mirror in a vehicle, as the number of blind spots that the driver is unable to view behind him is minimised.

The rear-view camera may capture motion picture data corresponding to a field of view having a first fixed size ratio. The display screen may be sized to display a motion picture comprising a second fixed size ratio less than the first fixed size ratio of the rear-view camera. The motion picture having the second fixed size ratio may correspond to a portion of the first fixed size ratio of the captured motion picture data field of view captured by the rear-view camera. The first fixed size ratio captured by the rear-view camera is larger than the motion picture ultimately displayed on the display screen. This means that the rear-view camera has a relatively large field of view. The display screen displays a motion picture showing only a portion of the rear view camera field of view. Therefore when there is a change in head and/or gaze position in use, a signal will be sent to the rear-view camera so that the captured motion picture data sent back to the display screen will show a different portion of the field of view of the rear-view camera, although the second fixed size ratio of the motion picture shown on the display screen will remain fixed. This allows the camera system to display a different perceived view on the display screen, dependent on the position of the driver's head and/or gaze.

The rear-view camera may comprise a means for capturing motion picture data corresponding to a rear-view camera fixed field of view. The first fixed size ratio of the rear-view camera may be achieved by having a wide-angled lens.

Alternatively, the rear-view camera may comprise a means for capturing motion picture data corresponding to a rear-view camera variable field of view. Rather than having a field of view with a second fixed size ratio which is larger than the first fixed size ratio, the rear-view camera may have a field of view with a fixed size ratio which is substantially the same as that of the display screen. The field of view of the rear-view camera will then change in response to a head and/or gaze movement by changing the angle of the rear-view camera lens.

The portion displayed on the display screen is dependent on the measurement signal generated by the measurement device and transmitted to the rear-view camera. This is advantageous as it allows the camera system to be responsive to the driver, in use.

The display screen is housed within a display module. The display module may comprise the measurement device. This is advantageous as it allows for the display module and the measurement device to be compact and take up a minimal amount of space when, for example, fitted to a front windscreen of a vehicle, therefore minimizing any impairment of view of the driver though the front windscreen.

The display screen may be elongate and housed within a front body portion of the display module.

The measurement device may be disposed about an upper region and about a central axis of the display module. Therefore, when a head and/or gaze movement is measured, the change in angle of the driver's head and/or gaze is intuitive to the change in angle of field of view of motion picture shown on the display screen.

The display module may comprise an attachment means for attachment to a surface. The attachment means may be a permanent, semi-permanent, or non-permanent attachment means for example, an adhesive, Velcro® or a sucker.

According to a second aspect of the present invention, there is provided a vehicle comprising a camera system, the camera system comprising: a display screen for displaying a motion picture, a rear-view camera for capturing motion picture data, an image processor for processing captured motion picture data into a motion picture for display on the display screen, and a data transmitter for transmitting captured motion picture data to the image processor. The camera system further comprises a measurement device for measuring a head and/or gaze movement of a driver, in use and for generating a measurement signal, and a means for transmitting the measurement signal to the rear-view camera. The rear-view camera is arranged to alter the captured motion picture data transmitted by the data transmitter, in response to the measurement signal, thereby causing a field of view change of the motion picture on the display screen.

The rear-view camera may be disposed towards the rear of the vehicle. This is so that the rear-view camera can capture motion picture data corresponding to a field of view with a full aspect of the view to the rear of the vehicle.

The display screen may be arranged on a front windscreen of the vehicle.

It will be appreciated that preferred and/or optional features of the first aspect of the invention may be incorporated alone or in appropriate combination within the second aspect of the invention also.

### Brief Description of the Figures

For a better understanding of the invention and to show how the same may be carried into effect, there will now be described, by way of example only, specific embodiments, methods and processes according to the present invention, with reference to the figures, in which:
Figure 1 illustrates a schematic diagram of a camera system according to an embodiment of the present invention;
Figure 2 illustrates a rear perspective view of the camera system of Figure 1 arranged on a vehicle;
Figure 3A illustrates a front view of a display screen and a measuring device of the camera system of Figure 1;
Figure 3B illustrates a side-on view of the display screen and the measuring device of the camera system of Figure 3A;
Figure 3C illustrates a top-down view of the display screen and the measuring device camera system of Figure 3A and 3B;

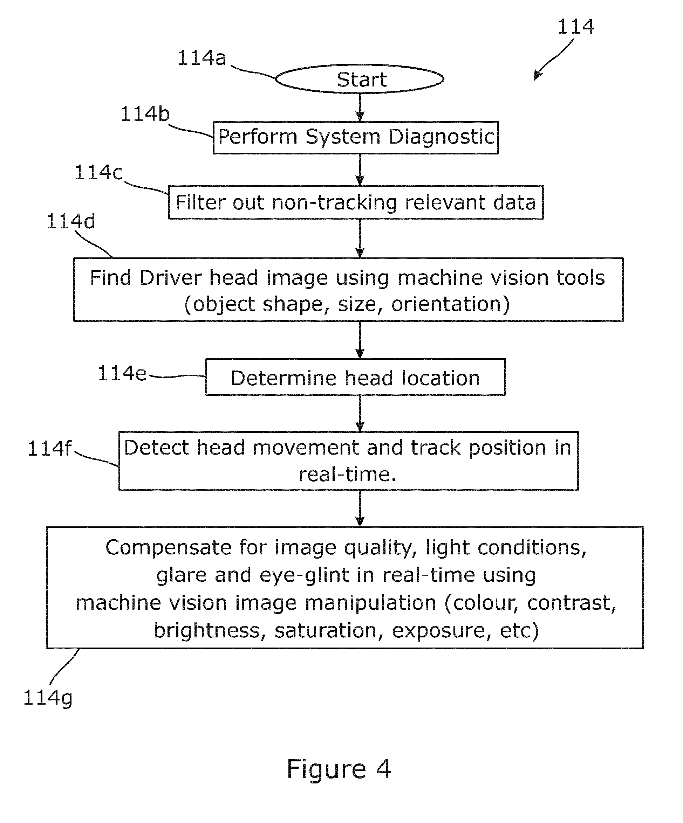

Figure 4 illustrates a flow diagram of a the operational mode of the camera system in Figures 1 to 3;
Figure 5 illustrates a front view of the display screen and the measuring device of the camera system of Figures 3A, 3B and 3C, in use, in a first arrangement;
Figure 6 illustrates a front view of the display screen and the measuring device of Figure 5, in use, in a second arrangement; and
Figure 7 illustrates a front view of the display screen and the measuring device of Figures 5 and 6, in use, in a third arrangement.

### Detailed Description

There will now be described by way of example, a specific mode contemplated by the inventors. In the following description numerous specific details are set forth in order to provide a thorough understanding. It will be apparent to one skilled in the art however, that the present invention may be practiced without limitation to these specific details. In other instances, well-known methods and structures have not been described so as not to unnecessarily obscure the description.

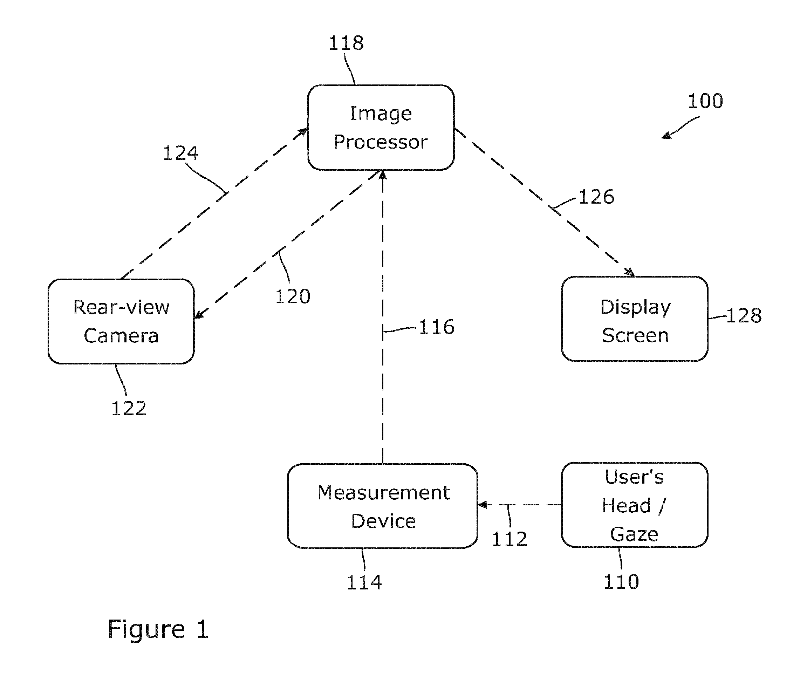

Referring to Figure 1, the camera system 100 includes a measurement device 114 which serves to measure positional information about a driver's head and/or gaze 110. The movement of a driver's head and/or gaze 110 is translated as a measurement signal 112 which is detected by a measurement processor (not shown) of the measurement device 114 by performance of a co-ordinate measurement process.

The measurement device 114 incorporates software (not shown) which performs a system calculation to convert the measurement signal 112 into a co-ordinate signal 116 which can be read by an image processor 118. The software is pre-loaded onto a hard drive of the measurement device 114. The measurement device 114 is in either wired or wireless communication with the image processor 118 to allow transmission of the co-ordinate signal 116. The software can of course be loaded on any suitable substrate, such as flash memory.

Although in Figure 1 the image processor 118 is shown as a separate unit, the image processor 118 may also be retained within or form an integral part of a rear-view camera 122. The advantage of an integral image processor 118 is that the number of wireless connections is reduced and the image processor 118 can connect directly to the rear-view camera 122 for virtually instantaneous data response. In either configuration, the image processor 118 is in two-way communication with the rear-view camera 122, such that motion picture data can be sent as a rear-view camera signal 124 from the rear-view camera 122 to the image processor 118 and co-ordinate data can be sent as an image processor signal 120 from the image processor 118 to the rear-view camera 122.

The rear-view camera 122 is operational to capture a fixed field of view in the form of motion picture data. Based on the co-ordinate signal 116 received from the measurement device 114, the image processor 118 sends motion picture data as a motion picture signal 126 to a display module which incorporates a display screen 128 . The motion picture data captured by the rear-view camera 122 relates to a fixed field of view, as determined by the camera 122, and the motion picture data sent to the display module relates to a portion of the fixed field of view.

The display module includes a hard drive (not shown) with a pre-determined software application for converting the motion picture signal 126 received from the image processor 118 into motion picture data suitable for display on the display screen 128.

The operation of the system and the various signals 112, 116, 120, 124, 126 will be described in further detail later.

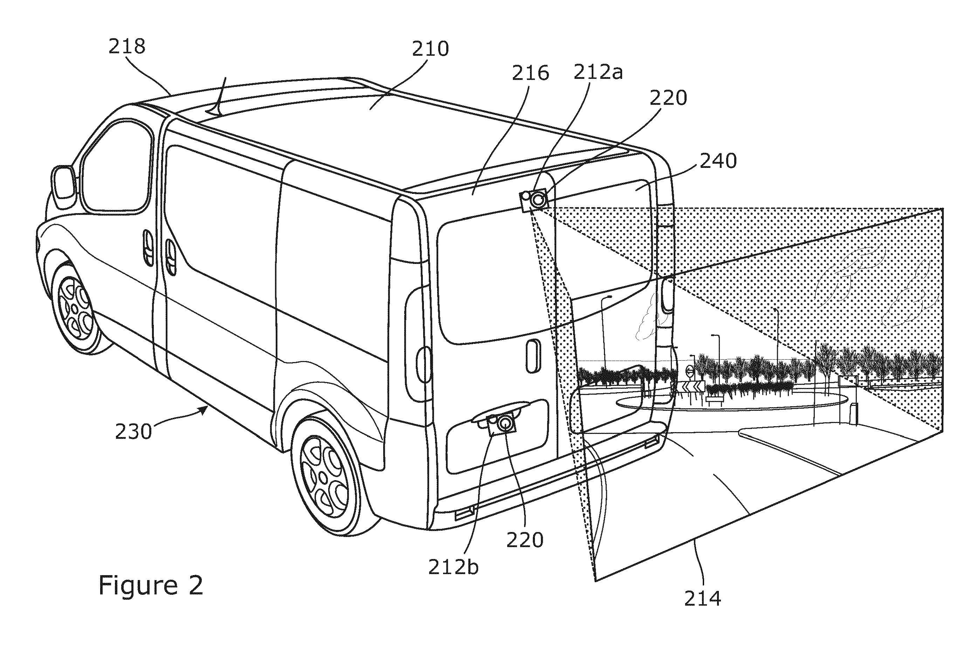

Referring to Figure 2, the camera system 200 is shown when mounted on a 'blind' vehicle 230. A 'blind' vehicle 230 is one which lacks rear and rear-side windows, thus limiting the rear view for a driver and making a conventional rear-view mirror system of the aforementioned type, redundant. Most commonly, such 'blind' vehicles include vans, trucks, heavy goods vehicles (HGVs) and light commercial vehicles (LCVs). The 'blind' vehicle 320 includes a front cabin where the driver sits. The cabin includes a back portion 210 which obscures the rear view of the vehicle. Rear doors 240 of the 'blind' vehicle 230 also act to impair the driver's vision directly to the rear of the vehicle 230. The blind vehicle is referred to as 'blind' as the rear-end 216 and the cabin back portion 210 obscure the driver's view directly to the rear of the vehicle when the driver is sat in the driver's seat (not shown).

The display module (not shown) and display screen 128 are positioned on the interior of a front windscreen 218 of the 'blind' vehicle 230, such that the driver has a clear view of the display screen 128 whilst sat in the driver's seat.

The measurement device 114 is positioned on the vehicle 230 near the display module such that the measurement device 114 can track the full range of movement of the driver's head and/or gaze 110, whilst sat in the driver's seat.

The rear-view camera 122 is located on the 'blind' vehicle 230 such that a lens 220 of the rear-view camera can capture a full field of view 214 to the rear. The rear-view camera 122 can be located in two preferable locations at the rear end 216 of the vehicle; either towards an upper region 212a of the rear end of the vehicle 230, or towards a lower region 212b of the rear end of the vehicle 230 for example, about the number plate of the vehicle. The rear-view camera 122 is mounted on the vehicle 200 such that the camera lens 220 has an unobstructed field of view 214 of the space directly behind the vehicle. A preferred location of the rear-view camera 122 is where it is positioned at a rear-end 216 of a vehicle either disposed centrally about a longitudinal axis towards the top 212a of the rear-end 216 of a vehicle or alternatively disposed substantially centrally about a longitudinal axis towards the bottom 212b of the rear end 216 of a vehicle. On a conventional 'blind' vehicle 230, the rear-view camera 122 may be positioned near a rear number plate or disposed on, or near, a vehicle's rear door / boot.

The camera system 200 could be retrofitted to the 'blind' vehicle 230 as well as forming a component part of the vehicle.

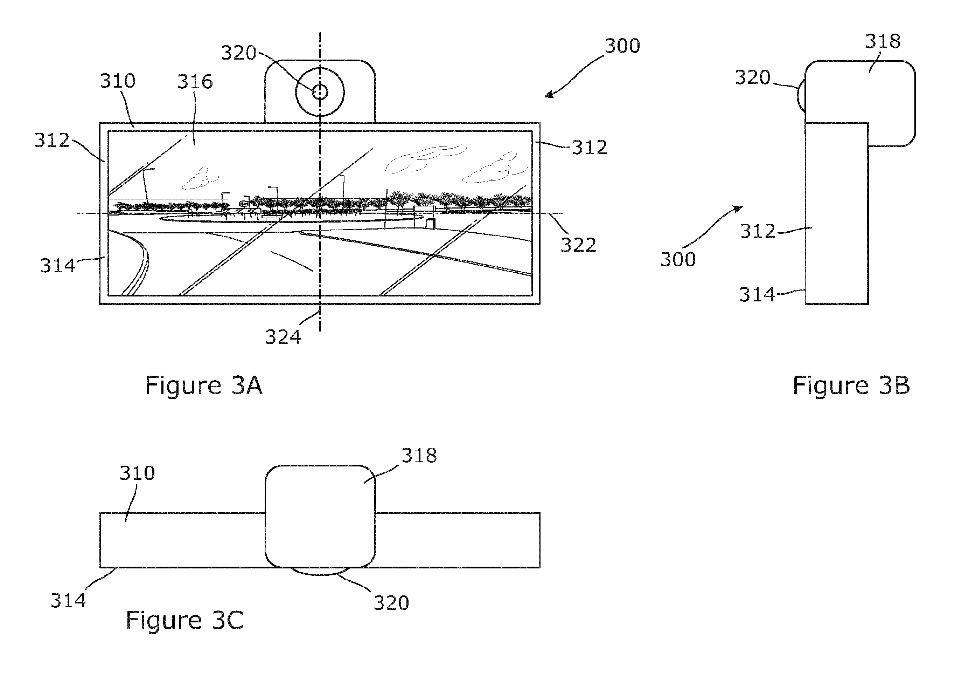

The camera system 100, 200 includes display screen 128 and corresponds to display screen 316, which is described in more detail with reference to Figure 3A. The display screen 128, 316 is configured to display electronic motion pictures. Optimally, the motion pictures shown will be of High Definition (HD) quality, and the display screen 128, 316 will be a plasma, LCD, or LED screen for displaying a High Definition motion picture. The display screen is elongate along a horizontal axis 322 and has a substantially rectangular geometry, such as to replicate the shape of a conventional rear-view mirror of a vehicle. The display screen 128, 316 is housed within a display module 300.

The motion picture displayed may also be termed a film, or any series of still images which when passed through a processor gives the viewer the impression of movement. The motion picture is produced by recording photographic images with the rear-view camera 122.

The display module 300 has upper and lower elongate faces, 310 and 324 respectively, which are adjoined by side faces 312. The adjacent faces 310, 324 lie substantially perpendicular to the side faces 324 to define a cavity within the display module 300 where the display screen 128, 316 is disposed. Located at the back face (not shown) of the display module is an attachment means (not shown) which is arranged to attach to an arm member (not shown) at a first end thereof. A second end of the arm member includes a means to attach the arm member and therefore the display module 300 to a surface, for example a surface of the front windscreen 218 of the vehicle. The display module 300 is attached to the arm member in a ball and socket type arrangement well known in the art.

The display module 300 comprises an integrated measurement device 318, 114 which is located towards the upper elongate face 310 and disposed towards the centre of the vertical axis 324 of the display module 300. The measurement device 318, 114 is operational to track and take readings corresponding to a movement of the driver and to manipulate the operational mode of the camera system 100 in response to any change in readings taken by the measurement device 318, 114. The measurement device 318, 114 includes software which is able to calibrate these readings into a data signal.

The measurement device 318, 114 includes head and/or gaze tracking technology including a tracking camera 320, which is located within the measurement device 318, 114. The tracking camera 320 can track the head and/or gaze movement 110 of a driver of a vehicle 200, for calibration by the software. The tracking camera 320 is positioned towards the driver's seat of the vehicle when the camera system 200 is fitted to a vehicle 230. The tracking camera 320 has a field of view which is large enough to capture a driver's head movement during normal driving, including parking and reversing, so that the camera system 100 is intuitive to as extensive a range as possible of head and/or gaze movements of the driver during driving.

Gaze tracking technology is built upon eye tracking technology. Traditional eye tracking typically senses the orientation of the eyes as well as the position in space (due to head movement). Gaze tracking is a development from this to take that orientation data and extrapolate a direction at which the eyes are focused. Head tracking measures the position and orientation of the entire head. Head tracking requires complex programming and logic implementation to allow extrapolation of the signal that is transmitted, based on the head position and orientation. Either head tracking or gaze tracking could be utilized in the camera system 100, 200. Gaze tracking is more accurate as this method tracks the driver's eye position, therefore the actual angle of direction that the driver is looking can be monitored. Head tracking on the other hand is less intuitive to where the driver is looking as the driver's head position may not necessarily reflect the direction that the driver is actually looking. Head tracking is, however, more cost effective and the technology is better developed and easier to implement.

The measurement device 318, 114 is operational to transmit signals 116 to a receiver (not shown) which includes the image processor 118. The measurement device 318, 114 and receiver can communicate through a wireless connection means (not shown). For example, the wireless connectivity could be a WiFi ®, infra-red or Bluetooth ® connection link. As well as receiving data from the measurement device 318, 114, the image processor 118 has a wireless connection means to transmit signals 126 to the display module 300 such that data can be transmitted from the image processor 118 to the display module 300.

As the lens 220 of the rear-view camera 122 is of a predetermined fixed size and zoom, the rear-view camera is able to capture motion picture data of a particular field of view 214 having a first fixed size ratio.

Only a portion of the field of view 214 having a first fixed size ratio is displayed on the display screen 128, 316 at any one time. The rear-view camera 122 therefore films / captures a dimensionally larger overall motion picture image than that which is displayed on the display screen 128, 316. The fixed position and size of the lens 220 enables the rear-view camera 122 to capture defined motion picture data corresponding to a fixed field of view 214 and a first fixed size ratio. As the rear-view camera 122 captures a large field of view 214, the angle of the lens 220 does not need to change.

As a result of motion picture data manipulation by the software of the display module 300, the output motion picture shown on the display screen 128, 316 is only a portional view 316 of the field of view 214 captured by the rear-view camera 122.

The portional view 316 displayed on the display screen 128, 316 has a second fixed size ratio, which is smaller than that of the first fixed size ratio of the field of view 214 captured by the rear-view camera 122. For example, the rear view camera 122 may capture motion picture data having a field of view with a fixed size ratio of 1000 x 1600 pixels. However, the motion picture displayed on the display screen may only display a portion of the field of view 214, having a fixed size ratio of 500 x 800 pixels.

The signal flow paths of the camera system 100 in Figure 1 will now be described in further detail. When in use, the measurement device 114 incorporating the tracking camera 320 measures the measurement signal 112 corresponding to the movement of the head and/or gaze 110 of the vehicle driver. The image processor (not shown) then processes and converts the measurement signal 112 into co-ordinate signal 116. The co-ordinate signal 116 corresponds to a change in angle of the driver's head and/or gaze 110 with respect to the measurement device 114 and the display screen 128. The measurement device 114 has a data transmitter (not shown) which is arranged to transmit the co-ordinate signal 116 to the image processor 118.

The image processor 118 is in two-way communication with the rear-view camera 122 via the signals 120, 124. The rear-view camera 122 captures motion picture data corresponding to a fixed field of view and transmits the motion picture data as the rear-view camera signal 124 to the image processor 118. The image processor 118 converts the rear-view camera signal 124 into a motion picture signal 126, which is then sent to the display module. The image processor 118 maps the motion picture data sent by the rear-view camera 122 to create an image map (not shown).

Following receipt of the co-ordinate signal 116 from the measurement device 114, the image processor 'picks out' a portion of the image map corresponding to the co-ordinate signal 116 received. The image processor 118 converts the respective portion of the image map into a motion picture data package which is then sent as a motion picture signal 126 to the display module. The display module consequently transforms the motion picture signal 126 into a motion picture to be displayed on the display screen 128. The motion picture therefore corresponds to a portion of the fixed field of view captured by the rear-view camera 122, with the motion picture being dependent on the coordinate signal 116 received by the image processor (and ultimately the head and/or gaze position 110 of the vehicle driver). The motion picture displayed on the display screen 128 is a real-time moving image of a rear-view of the vehicle.

When a different co-ordinate signal 116 is transmitted to the image processor 118, as a result of head and/or gaze movement, a different output motion picture is displayed on the display screen 128.

The camera system 100 as described herein could be considered as a system for replacing the function of a conventional rear-view mirror system; that is to provide a perceived reflection to the driver who views the motion picture displayed on the display screen 128. To this effect, the camera system 100 could be defined as a 'virtual mirror system'.

Referring to Figures 2, 3A, 3B and 3C herein, the operation mode of the measurement device 114 will now be explained.

Before the measurement device 114 is initiated, when the driver is not in their seat and no movement can be detected, the display screen 128 is arranged to show a motion picture having the default field of view 214 of the camera 122. The default view provides a reference view against which a head and/or gaze movement can be measured by the measurement device 114, 316, in order to effect a change in the portional view displayed on the display screen 128.

The measurement device 114, 316 is initiated when the tracking camera 320 monitors a movement within its field of view and a movement signal 112 is generated. The measurement device 114, 316 has a short range of tracking to minimise noise through unwanted movement such as people in the back seat of a vehicle. Typically, therefore, the tracking range of the tracking camera 320 is no greater than 1 metre³. Once movement of the driver's head and/or gaze is detected by the tracking camera 320, the measurement device 114 operation is started.

Following initiation at 114a, the measurement device software performs a system diagnostic 114b to record the movement data from the tracking camera 320. The measurement device 114 filters out any movement data that is not relevant at 114c, that is, any movement that does not relate to either a driver's head movement or a driver's gaze movement.

Once the non-tracking relevant data has been filtered out at 114c, the driver's head and/or gaze shape, size and orientation is mapped 114d from the remaining data that has not been filtered out. By mapping 114d the remaining unfiltered movement data, the measurement device 114, 316, calculates the angle at which the head and/or gaze is orientated 114e, relative to the tracking camera 320 and hence relative to the display screen 128, 316. The orientation of the head and/or gaze is mapped by the measuring device software, by converting data measured by the tracking camera 320 into a series of coordinates (as will be described in more detail below).

The tracking device 320 performs a co-ordinate measurement process in which detecting a head and/or gaze movement of the driver, measuring the head and/or gaze movement and the measuring device converting this data into a series of co-ordinates (114a, 114b, 114c, 114d and 114e) is carried out in real-time 114f.

In addition to the head and/or gaze tracking and measurement process (114a, 114b, 114c, 114d and 114e), the measurement device also includes a software application 114g which can counteract any external environmental factors which may hinder the accuracy of the measurement device. Such environmental factors include light conditions at differing times of the day, glare from lights and eye-glint. The software 114g includes a real-time vision image manipulation tool which can adjust the colour, contrast, brightness, saturation and exposure received by the tracking camera 320 and adds or subtracts compensation factors to the measurements taken from the tracking camera 320, therefore standardising these factors to a uniform data for manipulation by the camera system 100.

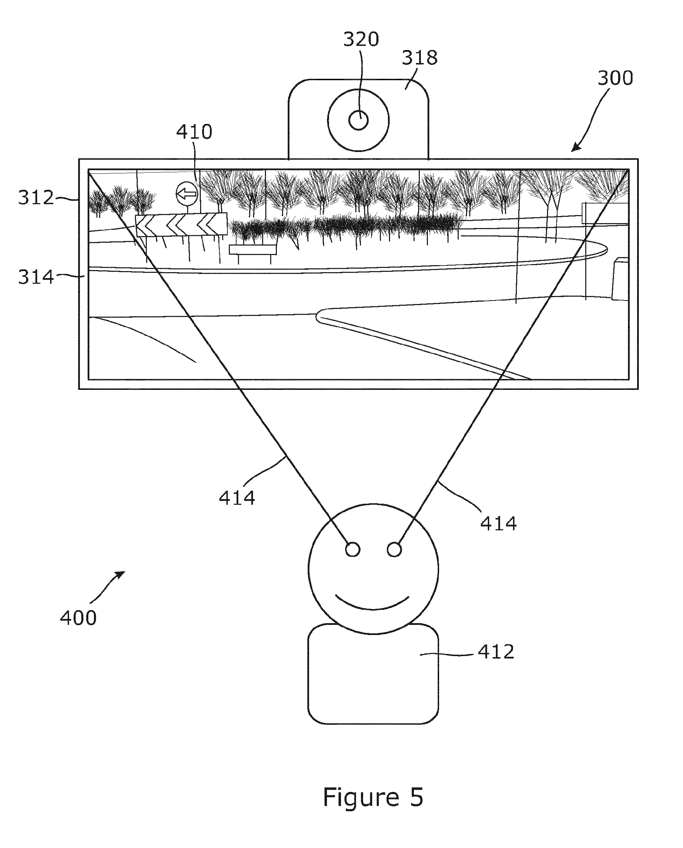

The tracking camera 320 co-ordinate measurement process is described with reference to Figures 5, 6 and 7 which show a first arrangement 400, a second arrangement 500 and a third arrangement 600 respectively. The measurement device 318 in this embodiment is configured to measure the gaze of a driver. In the first arrangement of Figure 5 the view 410 shown on the display screen located in the display module 300 is the default reference view. The reference position of the view 410 can be pre-determined according to a driver's height and normal, seated driving position when the camera system is arranged on the vehicle. When the driver 412 is in their normal, seated driving position, the tracking camera 320 tracks and measures the angle of the driver's 412 gaze with reference to the positioning/angle of vision 414 of the driver's eyes with respect to each point at which the side face 312 and the top face 310 or bottom face 324 of the display screen meet together. From this data, the measuring device 318 can calculate which portion of the field of view 214 needs to be displayed on the display screen 128.

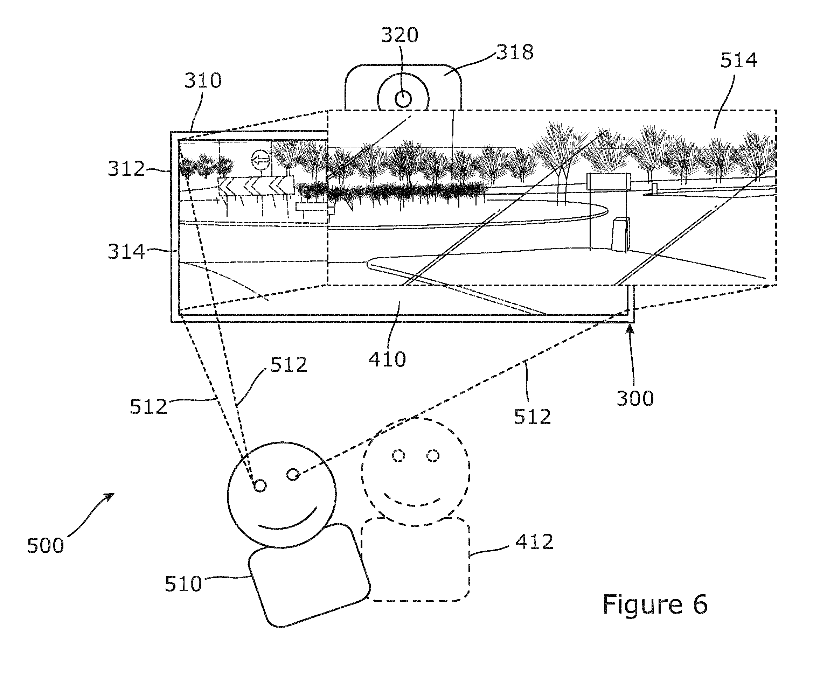

Figure 6 shows a second arrangement 500, where the driver has shifted from a default gaze position 412 to a second position 510. In the driver's second position 510, the angle of gaze, with respect to each point at which the side face 312 and the top face 310 or bottom face 324 of the display screen meet together, has changed. Therefore the tracking device 320 measures a different set of co-ordinates or angle of vision 512 to positioning/angle of vision 414 of the default first arrangement 400. In this respect the data signals sent from the measurement device to the rear-view camera 122 are different and the resultant output is a different portional view 514 of the field of view 214 shown with respect to the portional view 410 in the first arrangement 400.

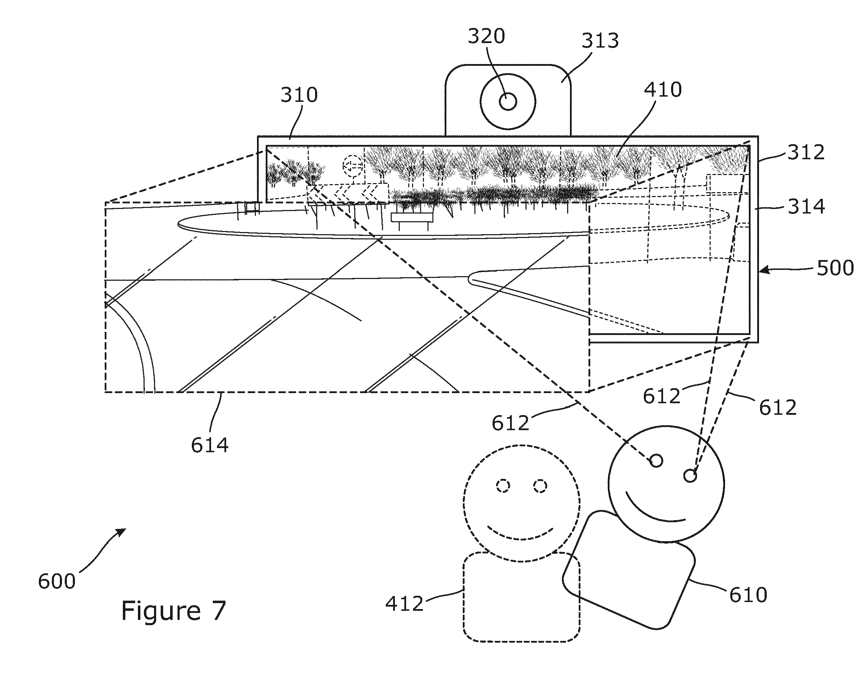

Figure 7 shows a third arrangement 600 with the driver's angle of gaze in a third position 610. Again this results in a change in the angle of vision 612 measured by the tracking camera and therefore a different data signal being sent to the rear-view camera 122. As a result, a third portional view 614 is displayed on the display screen 128, 316.

It will be understood that the embodiments described above are given by way of example only and are not intended to limit the invention, the scope of which is defined in the appended claims. It will also be understood that the embodiments described may be used individually or combined.

## Claims

1. A camera system for a vehicle, said camera system comprising:
a display screen for displaying a motion picture;
a rear-view camera for capturing motion picture data;
an image processor for processing captured motion picture data into a motion picture for display on the display screen; and
a data transmitter for transmitting captured motion picture data to the image processor;
wherein the camera system further comprises a measurement device for measuring a head and/or gaze movement of a driver, in use, and for generating a measurement signal, and a means for transmitting the measurement signal to the rear-view camera;
the rear-view camera being arranged to alter the captured motion picture data transmitted by the data transmitter, in response to the measurement signal, thereby causing a field of view change of the motion picture on the display screen.

2. A camera system as claimed in claim 1 wherein the measurement device comprises a measurement processor for processing the measurement of the head and/or gaze movement into the measurement signal.

3. A camera system as claimed in claim 1 or claim 2 further comprising a receiver for receiving data from the rear-view camera and a transmitter for transmitting the measurement signal to the receiver.

4. A camera system as claimed in claim 3 wherein the measurement device comprises a tracking camera configured to track the head and/or gaze movement of the driver, in use.

5. A camera system as claimed in claim 4 wherein the tracking camera is positioned in alignment with a central axis of the display screen.

6. A camera system as claimed in any of the preceding claims wherein the rear-view camera is configured to capture real-time motion picture data.

7. A camera system as claimed in any of the preceding claims wherein the data transmitter comprises a wired and/or wireless transmission means for transmitting captured motion picture data to the image processor.

8. A camera system as claimed in any of the preceding claims wherein the rear-view camera captures motion picture data corresponding to a field of view having a first fixed size ratio and the display screen is sized to display a motion picture comprising a second fixed size ratio less than the first fixed size ratio of the rear-view camera.

9. A camera system as claimed in claim 8 wherein the motion picture having the second size ratio and displayed on the display screen corresponds to a portion of the first fixed size ratio of the captured motion picture data field of view captured by the rear-view camera.

10. A camera system as claimed in claim 9 wherein the portion displayed on the display screen is dependent on the measurement signal generated by the measurement device and transmitted to the rear-view camera.

11. A camera system as claimed in claim any of the preceding claims wherein the rear-view camera comprises a means for capturing a motion picture data corresponding to a rear-view camera fixed field of view.

12. A camera system as claimed in any of claims 1 to 10 wherein the rear-view camera comprises means for capturing motion picture data corresponding to a rear-view camera variable field of view.

13. A camera system as claimed in any of the preceding claims wherein the display screen is housed within a display module and the display module comprises the measurement device.

14. A camera system as claimed in claim 13 wherein the display screen is elongate and housed within a front body portion of the display module.

15. A camera system as claimed in claim 14 wherein the measurement device is disposed about an upper region of the display module.

16. A camera system as claimed in claim 15 wherein the display module comprises an attachment means for attachment to a surface of a vehicle windscreen.

17. A vehicle comprising a camera system as claimed in any of the preceding claims.
